# FASCICULE DE BREVET EUROPEEN

(11) **EP 2 683 930 B1**
(45) Date de publication et mention de la délivrance du brevet: **12.12.2018**
(21) Numéro de dépôt: 12712329.7
(22) Date de dépôt: 06.03.2012
(51) Int. Cl.: F02K 9/52

(54) **INJECTEUR POUR LE MÉLANGE DE DEUX ERGOLS COMPRENANT AU MOINS UN ÉLÉMENT D'INJECTION A STRUCTURE TRICOAXIALE**
INJEKTOR ZUM MISCHEN ZWEIER TREIBSTOFFE MIT MINDESTENS EINEM EINSPRITZELEMENT MIT EINER TRIKOAXIALEN STRUKTUR
INJECTOR FOR MIXING TWO PROPELLANTS COMPRISING AT LEAST ONE INJECTION ELEMENT WITH A TRICOAXIAL STRUCTURE

(30) Priorité: 07.03.2011 FR 1151817; 07.03.2011 FR 1151816
(43) Date de publication de la demande: 15.01.2014
(73) Titulaire: ArianeGroup SAS, 75015 Paris (FR)
(72) Inventeur: LE CRAS, Jean-Luc, F-27950 Saint Marcel (FR); LONCHARD, Jean-Marie, F-27200 Vernon (FR); FOURNET, Arnaud, F-78630 Orgeval (FR); VERPLANCKE, Cyril, 92600 Asnieres Sur Seine (FR); DELAHAYE, Olivier, F-76350 Oissel (FR); CUCCO, Nicolas, F-33600 Pessac (FR)
(74) Mandataire: Intès, Didier Gérard André
(86) Numéro de dépôt international: PCT/FR2012/050458
(87) Numéro de publication internationale: WO 2012/120230

(56) Documents cités:
- DE-A1-102008 028 208
- FR-A1- 2 712 030
- FR-A1- 2 871 553
- JP-A- 6 281 115
- RU-C2- 2 205 289
- RU-C2- 2 232 916
- US-A- 3 527 056
- US-A- 5 172 548
- US-A- 6 045 061

## Description

L'invention concerne un injecteur pour le mélange de deux ergols en amont d'une chambre de combustion, par exemple la chambre de combustion d'un moteur de fusée. On entend par injecteur, un ensemble constitué par un ou plusieurs éléments d'injection et par une structure formant support et comportant des moyens d'alimentation en ergols du ou des éléments d'injection concernés.

Le document US 6 502 385 décrit un injecteur du genre mentionné ci-dessus, c'est-à-dire comportant au moins un élément d'injection monté entre deux plaques fixes espacées l'une de l'autre. L'ensemble constituant l'injecteur est encore appelé "tête d'injection". Le ou chaque élément d'injection est rigidement solidarisé aux deux plaques et assemblé à celles-ci. Selon le mode de réalisation spécifiquement décrit dans ce document antérieur, l'élément d'injection est vissé à une plaque de base amont et riveté à une plaque aval surmontant la chambre de combustion. L'élément d'injection est du type tricoaxial, c'est-à-dire comprenant un conduit coaxial médian, annulaire, pour un premier ergol et deux conduits coaxiaux pour un second ergol, respectivement un conduit coaxial interne et un conduit coaxial externe, annulaire. Les extrémités aval de ces trois conduits s'ouvrent au-delà d'un trou de la plaque aval en sorte que le mélange des deux ergols est éjecté, vers la chambre de combustion. L'enveloppe tubulaire extérieure, délimitant le conduit coaxial externe est riveté à la plaque aval. Le ou les éléments d'injection contribuent à stabiliser la position de celle-ci par rapport à la plaque amont et à empêcher qu'elle se déforme.

Par ailleurs, l'élément d'injection décrit est tel que le conduit coaxial interne et le conduit coaxial externe (dans lesquels circule ledit second ergol) communiquent par des passages ménagés radialement et traversent le conduit coaxial médian où circule le premier ergol. Il est donc difficile de calibrer les débits respectifs dudit deuxième ergol dans les conduits coaxiaux interne et externe. En outre, l'imbrication des pièces constituant l'élément d'injection, en raison de l'existence de ces passages au travers du conduit coaxial médian, est assez complexe et nécessite de mettre en oeuvre des techniques d'assemblage délicates et coûteuses. On connait également les documents FR 2 712 030, FR 2 871 553 et RU 2 205 289 qui décrivent d'autres types d'éléments d'injection.

L'invention permet de résoudre ces problèmes.

Plus particulièrement, l'invention concerne un injecteur pour le mélange de deux ergols selon la revendication 1. Cet injecteur est du type comportant au moins un élément d'injection à structure tricoaxiale installé entre deux plaques ou analogues, une plaque amont et une plaque aval délimitant entre elles un espace, et rigidement fixé à ces deux plaques, trois conduits coaxiaux étant définis dans ledit élément d'injection, un conduit coaxial médian, annulaire, pour un premier ergol et deux conduits coaxiaux pour un second ergol, respectivement un conduit coaxial interne et un conduit coaxial externe, annulaire, caractérisé en ce que ledit conduit coaxial interne et ledit conduit coaxial externe sont alimentés en parallèle en second ergol.

Selon un mode de réalisation, l'espace entre les deux plaques amont et aval forme un espace d'introduction dudit second ergol et le ou chaque élément d'injection est pourvu de passages indépendants et calibrés : au moins un premier passage reliant directement ledit espace d'introduction audit conduit coaxial interne et au moins un second passage reliant directement ledit espace d'introduction audit conduit coaxial externe.

Selon un mode de réalisation avantageux, le ou chaque élément d'injection comporte :
- un premier segment fixé à ladite plaque amont et dans lequel est ménagé ledit conduit coaxial interne,
- un deuxième segment fixé audit premier segment et définissant avec lui ledit conduit coaxial médian, annulaire et
- un troisième segment fixé audit deuxième segment et définissant avec lui ledit conduit coaxial externe, annulaire.

De façon simple, le premier segment comporte des trous s'étendant entre ledit conduit coaxial interne et ledit espace défini entre les plaques. Ces trous peuvent être pratiqués avec un angle par rapport à une direction radiale.

De façon similaire, le troisième segment comporte avantageusement des trous s'étendant entre ledit conduit coaxial externe et ledit espace défini entre les plaques. Ces trous peuvent aussi être pratiqués avec un angle par rapport à une direction radiale.

Selon une combinaison de moyens avantageuse, ledit premier segment comporte un corps central autour duquel est ménagé ledit conduit coaxial interne, ce dernier ayant dans ce cas une configuration annulaire.

L'invention sera mieux comprise et d'autres avantages de celle-ci apparaîtront plus clairement à la lumière de la description qui va suivre de plusieurs injecteurs conformes à son principe, donnée uniquement à titre d'exemple et faite en référence aux dessins annexés dans lesquels :
- la figure 1 est une vue schématique en coupe et en élévation d'un injecteur pour le mélange de deux ergols ;
- la figure 2 est une vue analogue à la figure 1, illustrant une variante ;
- la figure 3 est une vue analogue à la figure 1 illustrant une autre variante ;
- la figure 4 est une vue de détail illustrant une paroi d'un élément tubulaire, munie de nervures obliques, hélicoïdales ;
   la figure 5 est une vue schématique en coupe axiale d'un premier mode de réalisation de la partie d'extrémité d'un élément d'injection selon l'invention ;
- la figure 6 est une vue analogue à la figure 5, illustrant une variante ;
- la figure 7 est une vue analogue à la figure 5, illustrant une autre variante ; et
- la figure 8 est une vue analogue à la figure 5, illustrant encore une autre variante.

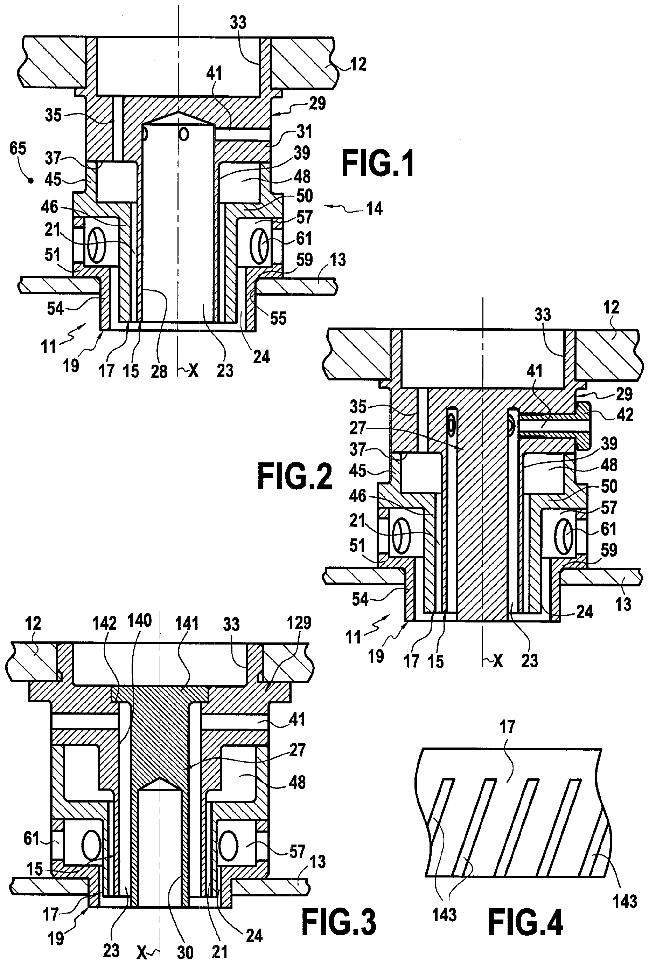

En se reportant plus particulièrement à la figure 1, on a représenté un injecteur 11 du type comportant une plaque amont 12 ou analogue, une plaque aval 13 ou analogue et au moins un élément d'injection 14 rigidement solidarisé aux deux plaques. De préférence, l'injecteur comporte une pluralité de tels éléments d'injection agencés entre les deux plaques selon une configuration axisymétrique (non représentée). L'ensemble des deux plaques et du ou des éléments d'injection constitue l'injecteur ou tête d'injection.

Le ou les éléments d'injection sont fixés, par exemple soudés, brasés ou vissés, au voisinage de leurs extrémités axiales respectives aux deux plaques amont 12 et aval 13. Chaque élément d'injection constitue donc, du point de vue mécanique, une sorte d'entretoise qui limite les déformations des plaques, notamment celles de la plaque 13 qui est soumise à un gradient de température important.

Chaque élément d'injection admet un axe de symétrie X perpendiculaire aux plaques 12 et 13 et a, transversalement à cet axe, un contour circulaire.

Selon les exemples décrits, non limitatifs, chaque élément d'injection à structure tricoaxiale comporte trois segments 15, 17, 19, tubulaires, assemblés entre eux de façon à ménager trois conduits coaxiaux 21, 23 et 24 dans lesquels circulent les deux ergols.

Par exemple, sur la figure 1, on distingue un conduit coaxial médian 21, un conduit coaxial interne 23 et un conduit coaxial externe 24. Le premier ergol circule dans le conduit coaxial médian 21 et le second ergol circule à la fois dans le conduit coaxial interne 23 et le conduit coaxial externe 24, les deux ergols se mélangeant aux sorties des trois conduits coaxiaux, en aval de la plaque 13. Le mélange est alors introduit dans une chambre de combustion (non représentée).

Les trois segments 15, 17, 19 coaxiaux sont assemblés entre eux par soudure, brasure ou éventuellement par vissage.

Le premier segment 15 est défini dans un bloc métallique 29 et est fixé à la plaque amont 12, de façon étanche. Il comporte une première section 31 dans laquelle est ménagée une cuvette amont 33 recevant le premier ergol. Celui-ci est introduit en amont de la plaque 12. La cuvette 33 se prolonge par une pluralité de perçages 35, ici parallèles à l'axe de symétrie X de l'élément d'injection 14 et débouchant sur un épaulement 37. Selon une variante non représentée, commune à tous les modes de réalisation, les perçages 35 peuvent être pratiqués suivant des directions inclinées, c'est-à-dire non parallèles à l'axe X et avec un angle tel qu'un mouvement de rotation du premier ergol est imprimé à la sortie des perçages 35.

L'épaulement 37 sépare la première section 31 d'une seconde section 39, cylindrique, centrale et de diamètre réduit. Dans cette seconde section 39 et, en continuité dans une partie de la première section 31, le conduit coaxial interne 23 est matérialisé par un trou borgne axial 28. Celui-ci est obtenu par un simple forage axial du bloc métallique 29. Des trous 41 s'étendent entre la périphérie du premier segment 15 et le conduit coaxial interne. Les trous 41 débouchent extérieurement dans l'espace défini entre les deux plaques 12, 13. Ils peuvent faire un angle par rapport à une direction radiale pour imprimer un mouvement de rotation du deuxième ergol dans le conduit coaxial interne 23.

Le deuxième segment 17, tubulaire, comporte deux sections de diamètres différents. La section 45 de plus grand diamètre a son extrémité fixée (ici soudée ou brasée) à la périphérie de l'épaulement 37 du premier segment 15. La section 46 de plus petit diamètre s'étend en regard de la paroi extérieure du premier segment pour définir avec celle-ci le conduit coaxial médian 21.

Une chambre de distribution annulaire 48 se trouve ainsi définie entre l'épaulement 37 et une paroi annulaire plate 50 du deuxième segment, reliant les deux sections 45, 46 de celui-ci. Cette chambre de distribution 48 communique avec le conduit coaxial médian 21. Les perçages 35 débouchent dans la chambre de distribution 48.

Le troisième segment 19, tubulaire, est globalement semblable au deuxième segment 17. Sa section de plus grand diamètre 51 a une extrémité fixée, ici soudée ou brasée, au pourtour de la paroi annulaire plate 50 du deuxième segment 17. Sa section de plus petit diamètre 54 s'étend en regard de la surface externe de la section 46 dudit deuxième segment et définit avec celle-ci le conduit coaxial externe 24. La section 54 est fixée de façon étanche au bord du trou 55 traversant la plaque 13, ici par brasure ou soudure.

Une chambre de distribution annulaire 57 se trouve définie entre ladite paroi plate 50 du deuxième segment 17 et une paroi annulaire plate 59 reliant les deux sections 51, 54 du troisième segment 19. Cette paroi 59 est en butée contre la face interne de la plaque 13.

La chambre de distribution 57 communique avec le conduit coaxial externe 24, annulaire. Des trous radiaux 61 sont pratiqués dans la section de grand diamètre 51 et débouchent d'une part dans la chambre de distribution 57 et d'autre part dans l'espace 65.

L'alimentation du second ergol se fait via l'espace 65 pour le ou les éléments d'injection 14.

Les trous 61 peuvent faire un angle par rapport à une direction radiale pour imprimer un mouvement de rotation du deuxième ergol dans la chambre de distribution 57 et le conduit coaxial externe 24.

Ainsi, l'espace 65 défini entre les plaques 12, 13 constitue un espace d'introduction du second ergol pour le ou les éléments d'injection et l'agencement décrit ci-dessus est tel que le conduit coaxial interne 23 et le conduit coaxial externe 24 sont alimentés en parallèle en second ergol, par les trous 41 et 61, respectivement.

Ces trous constituent des passages indépendants et calibrés. Au moins un premier passage (les trous 41) relie directement ledit espace d'introduction 65 au conduit coaxial interne 23 et au moins un second passage (les trous 61) relie directement l'espace d'introduction 65 au conduit coaxial externe. Le réglage des débits entre les conduits coaxiaux interne et externe s'en trouve donc facilité. Par ailleurs, la structure de chaque élément d'injection est extrêmement simple et peu coûteuse.

Le mode de réalisation de la figure 2 est semblable à celui de la figure 1, sauf en ce qui concerne la structure du premier segment qui comporte un corps central 27. Les autres éléments analogues portent les mêmes références numériques et ne seront pas décrits plus en détail. Ce corps central donne au conduit coaxial interne 23 une structure annulaire permettant de mieux concilier les impératifs de débit et de vitesse des différents flux d'ergols, juste avant leur mélange. Autrement dit, le premier segment comporte un corps central cylindrique autour duquel est ménagé le conduit coaxial interne 23, annulaire. Dans l'exemple de la figure 2, le corps central 27 et le premier segment 15 forment un seul bloc (le bloc métallique 29) et le conduit coaxial interne est creusé annulairement en profondeur dans ce bloc, en sorte d'individualiser le corps central 27. Le conduit coaxial interne 23 peut être réalisé par usinage EDM, technique connue en soi.

De plus, avantageusement, les trous 41 sont pratiqués dans des embouts 42 rapportés dans l'épaisseur du bloc métallique 29. Les trous 41 sont donc plus faciles à calibrer. Cette variante peut s'appliquer à tous les modes de réalisation.

Dans le mode de réalisation de la figure 3, le corps central 27 est rapporté dans un évidement axial dudit premier segment, lequel s'étend de la cuvette 33 à l'extrémité aval de l'élément d'injection. Autrement dit, le premier segment est réalisé en deux parties coaxiales soudées, une partie externe 129 a une forme tubulaire tandis que la partie centrale 27 constitue le corps central. Celui-ci est donc un élément rapporté, soudé ou brasé, dans un perçage axial 140 de l'élément d'injection. Cet élément rapporté à ici une forme cylindrique terminée, en amont, par une extrémité de plus grand diamètre 141 formant collerette, soudée ou brasée dans un évidement annulaire 142 formant épaulement, de l'extrémité correspondante (amont) dudit élément d'injection. Une fois le corps central soudé, la cuvette 33, recevant le premier ergol, se trouve reconstituée comme dans les exemples précédents. Dans cet exemple, le corps central 27 comporte un évidement ouvert 30, à son extrémité aval. Cet évidement définit une zone de recirculation turbulente en aval du corps central. Il réduit aussi la masse du corps central. Cet évidement permet aussi de réduire les risques de couplages aéroélastiques entre l'écoulement et les premiers modes propres de vibration du corps central. Cet évidement est optionnel et compatible avec le mode de réalisation de la figure 2.

La figure 4 décrit une variante avantageuse dans laquelle des ailettes hélicoïdales 143 (ou des gorges) sont pratiquées sur une face d'au moins une paroi délimitant l'un des conduits coaxiaux 21, 13, 24. Sur la figure 4 on a représenté la paroi 17 pourvue de telles ailettes (ou gorges) sur sa paroi intérieure, en sorte qu'elles s'étendent à l'intérieur du conduit coaxial médian 21. On obtient ainsi une circulation dite « swirlée » dans ce conduit 21. Le même agencement peut être prévu sur une paroi de l'élément tubulaire 15 ou 19, voire sur la paroi externe du corps central 27. Dans ce cas, les ailettes 143 ou gorges s'étendent dans le conduit coaxial interne et/ou externe pour y créer le même type de circulation « swirlée ».

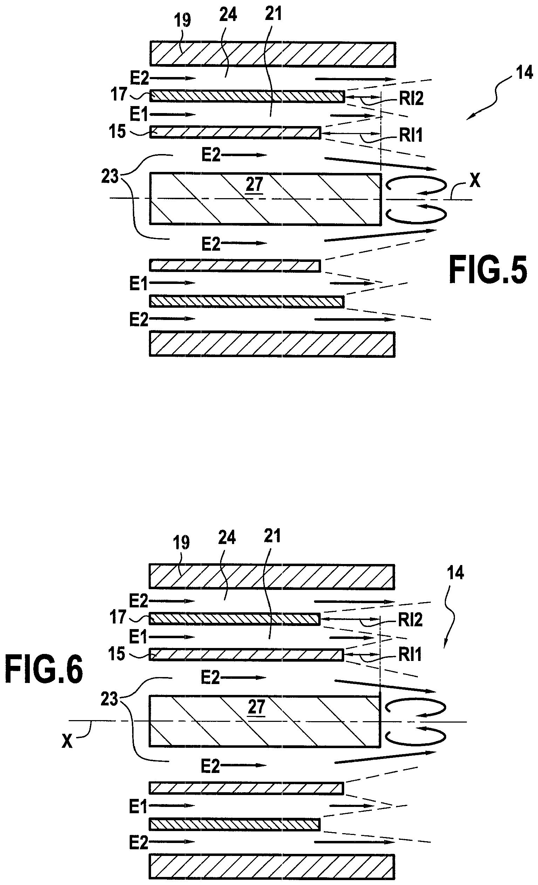

D'autres caractéristiques avantageuses de l'élément d'injection 14 en tant que tel, sont décrites en référence aux figures 5 à 7. Sur ces figures, on a représenté la partie terminale d'un élément d'injection 14 à structure tri-coaxiale pour le mélange de deux ergols. L'élément d'injection admet un axe de symétrie X. La façon dont les différentes parties constitutives de cet élément d'injection sont agencées les unes par rapport aux autres et maintenues dans leurs positions respectives tout en étant connectés aux deux circuits d'alimentation des ergols n'est pas représentée. On rappelle qu'une pluralité d'éléments d'injection peuvent ainsi être installés parallèlement les uns aux autres selon une configuration axi-symétrique pour constituer un injecteur.

Comme précédemment, élément d'injection 14 comprend, dans sa partie terminale où les deux ergols doivent se mélanger, plusieurs segments tubulaires 15, 17, 19 définissant des conduits coaxiaux annulaires. On distingue un conduit coaxial médian 21, annulaire, dans lequel circule un premier ergol E1 et ce conduit coaxial médian jouxte deux conduits coaxiaux 23, 24 dans lesquels circule un second ergol E2. On distingue donc respectivement un conduit coaxial interne 23 et un conduit coaxial externe 24, annulaire.

L'élément d'injection comporte aussi un corps central interne 27 agencé axialement, selon l'axe X, à l'intérieur du conduit coaxial interne 23 dans lequel circule une partie du second ergol E2. Autrement dit, ce corps central interne 27 confère une configuration annulaire au conduit coaxial interne 23.

Selon le mode de réalisation de la figure 5, l'extrémité de la paroi externe du conduit coaxial interne 23 présente un premier retrait axial RI1 par rapport à l'extrémité du corps central 27. Il se caractérise aussi par le fait que l'extrémité de la paroi interne du conduit coaxial externe 24 présente un second retrait RI2 par rapport à l'extrémité du corps central 27.

Ces deux retraits RI1 et RI2 sont appelés "retraits internes". Il est clair que l'élément d'injection peut ne comporter qu'un seul retrait interne défini ci-dessus si l'extrémité de la paroi de l'autre conduit se situe dans le même plan radial que celui de l'extrémité du corps central.

Dans le mode de réalisation de la figure 5, on a défini deux retraits internes RI1, RI2 mais ledit premier retrait RI1 est plus grand que ledit second retrait RI2. Au contraire, selon la figure 6, on note que le premier retrait RI1 est plus petit que le second retrait RI2.

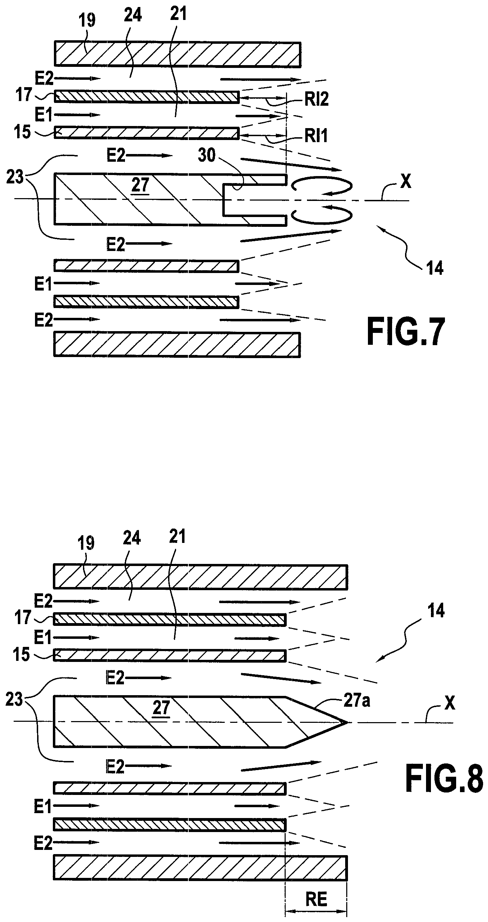

Enfin, selon le mode de réalisation de la figure 7, on note que lesdits premier et second retraits RI1, RI2 sont égaux.

En outre, dans le mode de réalisation de la figure 7, on a pratiqué un évidement ouvert 30 à l'extrémité aval du corps central 27.

Tous ces modes de réalisation ont été représentés pour montrer l'ensemble des paramètres supplémentaires dont on dispose pour agir structurellement sur la qualité du mélange des deux ergols.

Le diamètre ou plus généralement le volume du corps central 27 permet de régler la section du conduit coaxial interne 23, désormais annulaire et par conséquent d'ajuster la vitesse de la partie du second ergol qui circule dans ce conduit, pour obtenir le cisaillement interne désiré du premier ergol débouchant du conduit coaxial médian 21, annulaire. En second lieu, la présence de l'évidement ouvert 30 à l'extrémité du corps central permet d'agir sur une zone de recirculation en aval de ce corps central. La forme et les dimensions de cet évidement permettent d'ajuster la configuration et l'importance de cette zone de recirculation. Enfin, en jouant sur la présence éventuelle d'un ou deux retraits internes, on peut aussi agir sur les turbulences créées dans la zone de cisaillement, pour optimiser le mélange des ergols.

Au contraire, si on cherche à réduire la zone de recirculation aval, on peut prolonger le corps central en pointe, au lieu d'y pratiquer un évidement en bout, comme indiqué ci-dessus. C'est la situation illustrée sur la figure 8. Dans cet exemple la pointe 27a s'étend à l'intérieur de l'espace d'un retrait RE, dit retrait externe, défini entre l'extrémité de l'enveloppe externe (le segment tubulaire 19) et l'extrémité d'au moins un conduit coaxial 21, 23, 24 défini ci-dessus.

## Revendications

1. Injecteur pour le mélange de deux ergols, du type comportant plusieurs éléments d'injection (14) à structure tricoaxiale installé entre deux plaques (12, 13) ou analogues, une plaque amont et une plaque aval délimitant entre elles un espace (65), trois conduits coaxiaux étant définis dans chaque élément d'injection, un conduit coaxial médian (21), annulaire, pour un premier ergol et deux conduits coaxiaux pour un second ergol, respectivement un conduit coaxial interne (23) et un conduit coaxial externe (24), annulaire,
dans lequel ledit conduit coaxial interne (23) et ledit conduit coaxial externe (24) sont alimentés en parallèle en second ergol,
dans lequel chaque élément d'injection est rigidement fixé aux deux plaques,
dans lequel ledit espace (65) entre les deux plaques amont et aval forme un espace d'introduction dudit second ergol,
caractérisé en qu'au moins un élément d'injection comprend une chambre de distribution (57) annulaire communiquant avec le conduit coaxial externe (24), des trous radiaux (61) débouchant d'une part dans la chambre de distribution (57) et d'autre part dans ledit espace (65).

2. Injecteur selon la revendication 1, **caractérisé en ce qu'**au moins un élément d'injection précité est pourvu de passages indépendants et calibrés : au moins un premier passage (41) reliant directement ledit espace d'introduction audit conduit coaxial interne et au moins un second passage (61) reliant directement ledit espace d'introduction audit conduit coaxial externe.

3. Injecteur selon l'une des revendications précédentes, **caractérisé en ce que** le ou chaque élément d'injection comporte :
- un premier segment (15) fixé à ladite plaque amont et dans lequel est ménagé ledit conduit coaxial interne,
- un deuxième segment (17) fixé audit premier segment et définissant avec lui ledit conduit coaxial médian, annulaire et
- un troisième segment (19) fixé audit deuxième segment et définissant avec lui ledit conduit coaxial externe, annulaire.

4. Injecteur selon la revendication 3, **caractérisé en ce que** ledit premier segment (15) comporte des trous (41) s'étendant entre ledit conduit coaxial interne et ledit espace défini entre les plaques.

5. Injecteur selon la revendication 4, **caractérisé en ce que** les trous dudit premier segment sont pratiqués avec un angle par rapport à une direction radiale.

6. Injecteur selon l'une des revendications 3 à 5, **caractérisé en ce que** ledit troisième segment comporte des trous (61) s'étendant entre ledit conduit coaxial externe et ledit espace défini entre les plaques.

7. Injecteur selon la revendication 6, **caractérisé en ce que** les trous dudit troisième segment sont pratiqués avec un angle par rapport à une direction radiale.

8. Injecteur selon l'une des revendications 3 à 7, **caractérisé en ce que** ledit premier segment comporte un corps central (27) autour duquel est ménagé ledit conduit coaxial interne, annulaire.

9. Injecteur selon la revendication 8, **caractérisé en ce que** ledit corps central (27) et ledit premier segment (15) forment un seul bloc, ledit conduit coaxial interne étant creusé annulairement en profondeur en sorte d'individualiser ledit corps central.

10. Injecteur selon la revendication 8, **caractérisé en ce que** le corps central (27) est rapporté dans un évidement axial dudit premier segment (15).

11. Injecteur selon la revendications 1, **caractérisé en ce qu'**un élément d'injection (14) précité comporte en outre un corps central interne (27) agencé axialement à l'intérieur dudit conduit coaxial interne (23) pour lui conférer une configuration annulaire, **en ce que** l'extrémité de la paroi externe dudit conduit coaxial interne présente un premier retrait axial (RI1) par rapport à l'extrémité dudit corps central et/ou l'extrémité de la paroi interne dudit conduit coaxial externe présente un second retrait axial (RI2) par rapport à l'extrémité dudit corps central.

12. Injecteur selon la revendication 11, **caractérisé en ce que** l'extrémité aval dudit corps central comporte un évidement ouvert (30).

13. Injecteur selon la revendication 11, **caractérisé en ce que** lesdits premier et second retraits existent et sont égaux.

14. Injecteur selon la revendication 11, **caractérisé en ce que** lesdits premier et second retraits existent et sont inégaux.

15. Injecteur selon l'une des revendications 11, 13 ou 14, **caractérisé en ce que** ledit corps central comporte une pointe (27a).

## Patentansprüche

1. Injektor zum Mischen zweier Treibstoffe von dem Typ, der mehrere Einspritzelemente (14) mit einer trikoaxialen Struktur umfasst, die zwischen zwei Platten (12, 13) oder Analoga installiert ist, wobei eine stromaufwärtige Platte und eine stromabwärtige Platte dazwischen einen Raum (65) definieren, wobei drei koaxiale Leitungen in jedem Einspritzelement definiert sind, eine ringförmige mittlere koaxiale Leitung (21) für einen ersten Treibstoff und zwei koaxiale Leitungen für einen zweiten Treibstoff, jeweils eine innere koaxiale Leitung (23) und eine ringförmige koaxiale äußere Leitung (24),
wobei die innere koaxiale Leitung (23) und die äußere koaxiale Leitung (24) parallel mit dem zweiten Treibstoff versorgt werden,
wobei jedes Einspritzelement starr an den beiden Platten befestigt ist,
wobei der Raum (65) zwischen den beiden Platten stromaufwärts und stromabwärts einen Raum zum Einbringen des zweiten Treibstoffs bildet,
**dadurch gekennzeichnet, dass** mindestens ein Einspritzelement eine ringförmige Verteilungskammer (57), die mit der äußeren koaxialen Leitung (24) kommuniziert, und radiale Löcher (61), die einerseits in die Verteilungskammer (57) und andererseits in den Raum (65) münden, umfasst.

2. Injektor nach Anspruch 1, **dadurch gekennzeichnet, dass** mindestens ein Einspritzelement mit unabhängigen und kalibrierten Durchgängen versehen ist:
mindestens einem ersten Durchgang (41), der direkt den Raum zum Einbringen mit der inneren koaxialen Leitung verbindet, und mindestens einem zweiten Durchgang (61), der direkt den Raum zum Einbringen mit der äußeren koaxialen Leitung verbindet.

3. Injektor nach einem der vorhergehenden Ansprüche, **dadurch gekennzeichnet, dass** das oder jedes Einspritzelement umfasst:
- ein erstes Segment (15), das an der stromaufwärtigen Platte befestigt ist und in dem die innere koaxiale Leitung aufgenommen ist,
- ein zweites Segment (17), das an dem ersten Segment befestigt ist und mit diesem die ringförmige mittlere koaxiale Leitung definiert, und
- ein drittes Segment (19), das an dem zweiten Segment befestigt ist und mit diesem die ringförmige äußere koaxiale Leitung definiert.

4. Injektor nach Anspruch 3, **dadurch gekennzeichnet, dass** das erste Segment (15) Löcher (41) umfasst, die sich zwischen der inneren koaxialen Leitung und dem zwischen den Platten definierten Raum erstrecken.

5. Injektor nach Anspruch 4, **dadurch gekennzeichnet, dass** die Löcher des ersten Segments unter einem Winkel in Bezug auf eine radiale Richtung ausgeführt sind.

6. Injektor nach einem der Ansprüche 3 bis 5, **dadurch gekennzeichnet, dass** das dritte Segment Löcher (61) umfasst, die sich zwischen der äußeren koaxialen Leitung und dem zwischen den Platten definierten Raum erstrecken.

7. Injektor nach Anspruch 6, **dadurch gekennzeichnet, dass** die Löcher des dritten Segments unter einem Winkel in Bezug auf eine radiale Richtung ausgeführt sind.

8. Injektor nach einem der Ansprüche 3 bis 7, **dadurch gekennzeichnet, dass** das erste Segment einen zentralen Körper (27) umfasst, um den die ringförmige innere koaxiale Leitung aufgenommen ist.

9. Injektor nach Anspruch 8, **dadurch gekennzeichnet, dass** der zentrale Körper (27) und das erste Segment (15) einen einzelnen Block bilden, wobei die innere koaxiale Leitung ringförmig in der Tiefe aufgeweitet ist, um den zentralen Körper zu individualisieren.

10. Injektor nach Anspruch 8, **dadurch gekennzeichnet, dass** der zentrale Körper (27) in einer axialen Ausnehmung des ersten Segments (15) angeordnet ist.

11. Injektor nach Anspruch 1, **dadurch gekennzeichnet, dass** ein Einspritzelement (14) außerdem einen zentralen inneren Körper (27) umfasst, der axial im Inneren der inneren koaxialen Leitung (23) angeordnet ist, um diesem eine ringförmige Auslegung zu verleihen, dadurch, dass das Ende der Außenwand der inneren koaxialen Leitung eine erste axiale Aussparung (RI1) in Bezug auf das Ende des zentralen Körpers aufweist, und/oder das Ende der Innenwand der äußeren koaxialen Leitung eine zweite axiale Aussparung (RI2) in Bezug auf das Ende des zentralen Körpers aufweist.

12. Injektor nach Anspruch 11, **dadurch gekennzeichnet, dass** das stromabwärtige Ende des zentralen Körpers eine offene Aussparung (30) umfasst.

13. Injektor nach Anspruch 11, **dadurch gekennzeichnet, dass** die erste und zweite Aussparung vorliegen und gleich sind.

14. Injektor nach Anspruch 11, **dadurch gekennzeichnet, dass** die erste und zweite Aussparung vorliegen und ungleich sind.

15. Injektor nach einem der Ansprüche 11, 13 oder 14, **dadurch gekennzeichnet, dass** der zentrale Körper eine Spitze (27a) aufweist.

## Claims

1. An injector for mixing two propellants, of the type including several injection elements (14) with a tricoaxial structure installed between two plates (12, 13) or similar members, an upstream plate and a downstream plate delimiting a space (65) between them, three coaxial ducts being defined in each injection element, an annular middle coaxial duct (21) for a first propellant and two coaxial ducts for a second propellant, an internal coaxial duct (23) and an annular external coaxial duct (24), respectively,
wherein said internal coaxial duct (23) and said external coaxial duct (24) are supplied in parallel with a second propellant,
wherein each injection element is rigidly fixed to the two plates,
wherein said space (65) between the two upstream and downstream plates forms a space for introducing said second propellant,
**characterized in that** at least an injection element comprises a annular distribution chamber (57) which communicates with the annular external coaxial duct (24), radial holes (61) emerging on the one hand in the distribution chamber (57) and on the other hand in the space (65).

2. The injector according to claim 1, **characterized in that** at least one aforementioned injection element is provided with independent and calibrated passages: at least one first passage (41) directly connecting said introduction space to said internal coaxial duct and at least one second passage (61) directly connecting said introduction space to said external coaxial duct.

3. The injector according to one of the preceding claims, **characterized in that** the or each injection element includes:
- a first segment (15) fixed to said upstream plate and in which said internal coaxial duct is formed,
- a second segment (17) fixed to said first segment and defining said annular middle coaxial duct therewith, and
- a third segment (19) fixed to said second segment and defining said annular external coaxial duct therewith.

4. The injector according to claim 3, **characterized in that** said first segment (15) includes holes (41) extending between said internal coaxial duct and said space defined between the plates.

5. The injector according to claim 4, **characterized in that** the holes of said first segment are formed at an angle relative to a radial direction.

6. The injector according to one of claims 3 to 5, **characterized in that** said third segment includes holes (61) extending between said external coaxial duct and said space defined between the plates.

7. The injector according to claim 6, **characterized in that** the holes of said third segment are formed at an angle relative to a radial direction.

8. The injector according to one of claims 3 to 7, **characterized in that** said first segment includes a central body (27) around which said annular internal coaxial duct is formed.

9. The injector according to claim 8, **characterized in that** said central body (27) and said first segment (15) form a single block, said internal coaxial duct being annularly hollowed depth wise so as to individualize said central body.

10. The injector according to claim 8, **characterized in that** the central body (27) is attached in an axial recess of said first segment (15).

11. The injector according to claim 1, **characterized in that** one aforementioned injection element (14) further includes an inner central body (27) arranged axially inside said internal coaxial duct (23) to give it an annular configuration, **in that** the end of the outer wall of said internal coaxial duct has a first axial indentation (RI1) relative to the end of said central body and/or the end of the inner wall of said external coaxial duct has a second axial indentation (RI2) relative to the end of said central body.

12. The injector according to claim 11, **characterized in that** the downstream end of said central body includes an open indentation (30).

13. The injector according to claim 11, **characterized in that** said first and second indentations exist and are equal.

14. The injector according to claim 11, **characterized in that** said first and second indentations exist and are unequal.

15. The injector according to one of claims 11, 13 or 14, **characterized in that** said central body has a tip (27a).
